# EUROPEAN PATENT APPLICATION

(11) **EP 4 797 790 A1**
(43) Date of publication of application: **26.08.2026**
(21) Application number: 24896013.0
(22) Date of filing: 09.10.2024
(51) Int. Cl.: H04W 28/24

(54) **DATA TRANSMISSION METHOD AND APPARATUS BASED ON QUALITY OF SERVICE**

(30) Priority: 29.11.2023 CN 202311622660
(71) Applicant: HUAWEI TECHNOLOGIES CO., LTD., Shenzhen, Guangdong 518129 (CN)
(72) Inventor: FU, Yu, Shenzhen, Guangdong 518129 (CN); QIN, Yi, Shenzhen, Guangdong 518129 (CN); CAO, Youlong, Shenzhen, Guangdong 518129 (CN)
(74) Representative: Maiwald GmbH
(86) International application number: PCT/CN2024/123618
(87) International publication number: WO 2025/112919

(57) **Abstract**

A quality of service-based data transmission method and an apparatus are provided, so that a terminal can better support QoS-based data transmission, thereby improving service performance and user experience. The method includes: A terminal reports at least one candidate quality of service QoS and an activation duration of the candidate QoS to a RAN node, where the at least one candidate QoS includes a first QoS, and the activation duration of the candidate QoS includes an activation duration of the first QoS; the RAN node obtains the at least one candidate QoS and the activation duration of the candidate QoS, and sends, to the terminal, first information indicating the first QoS; and after the terminal receives the first information, the terminal and the RAN node perform data transmission based on the first QoS in the activation duration of the first QoS.

## Description

This application claims priority to Chinese Patent Application No. 202311622660.9, filed with the China National Intellectual Property Administration on November 29, 2023 and entitled "QUALITY OF SERVICE-BASED DATA TRANSMISSION METHOD AND APPARATUS", which is incorporated herein by reference in its entirety.

### TECHNICAL FIELD

Embodiments of this application relate to the communication field, and in particular, to a quality of service-based data transmission method and an apparatus.

### BACKGROUND

In recent years, with development of 5th generation (5th generation, 5G) communication systems, a data transmission delay of the 5G communication systems is continuously reduced, and a transmission capacity is continuously increased. Consequently, the 5G communication systems have gradually been applied to some multimedia services that require high real-time performance and a large data capacity, such as video transmission, cloud gaming (cloud gaming, CG), and extended reality (extended reality, XR).

In a 5G communication system, end-to-end quality of service assurance may be provided for services by configuring a quality of service (quality of service, QoS). For example, the QoS may include but is not limited to a priority, a packet delay budget (packet delay budget, PDB), and reliability. A reliability requirement for XR video transmission is usually 99%, an air interface delay requirement for uplink XR video transmission is usually 30 milliseconds (milliseconds, ms), and an air interface delay requirement for downlink XR video transmission is usually 10 ms.

However, current QoS configuration manners may cause a terminal to fail to completely support QoS adjustment, affecting service performance and degrading user experience.

### SUMMARY

This application provides a quality of service-based data transmission method and an apparatus, so that a terminal can better support QoS-based data transmission, thereby improving service performance and user experience.

According to a first aspect, a quality of service-based data transmission method is provided. The method may be performed by a terminal, or may be performed by a module (for example, a processor, a chip, or a chip system) used in the terminal, or may be implemented by a logical node, a logical module, or software that can implement all or a part of functions of the terminal. The method includes: reporting at least one candidate QoS and an activation duration of the candidate QoS, where the at least one candidate QoS includes a first QoS, and the activation duration of the candidate QoS includes an activation duration of the first QoS; receiving first information indicating the first QoS; and performing data transmission based on the first QoS in the activation duration of the first QoS.

Based on this solution, the terminal may report the at least one candidate QoS and the activation duration of the candidate QoS; and when a RAN node subsequently configures the first QoS, the terminal may perform data transmission based on the first QoS in the activation duration of the first QoS. To be specific, a duration for which the terminal performs data transmission based on a QoS may be specified. When the QoS is high, the terminal may be prevented from performing data transmission based on the high QoS for a long period of time, thereby reducing power consumption of the terminal. In addition, an activation duration of the QoS is reported by the terminal. Therefore, the terminal may flexibly adjust the activation duration with reference to a power consumption support capability of the terminal, to meet a quality of service requirement as much as possible while ensuring power consumption of the terminal, thereby improving service performance and user experience.

In a possible design, start time of the activation duration of the first QoS is obtained based on receiving time of the first information; or start time of the activation duration of the first QoS is obtained based on receiving time of the first information and a hysteresis duration for QoS activation.

Based on this possible design, the start time of the activation duration of the first QoS can be determined, and a specific time period in which data transmission is performed based on the first QoS can be specified, thereby controlling a duration for which data transmission is performed based on the first QoS, and reducing power consumption of the terminal.

In a possible design, the reporting the at least one candidate QoS includes: reporting the at least one candidate QoS through terminal capability information.

Based on this possible design, the terminal capability information is usually sent before RRC reconfiguration. Therefore, the at least one candidate QoS is reported based on the terminal capability information, so that the RAN node can learn of, as early as possible, the candidate QoS supported by the terminal, to perform QoS configuration more appropriately based on the candidate QoS as early as possible, thereby improving service quality.

In a possible design, the reporting the activation duration of the candidate QoS includes: reporting the activation duration of the candidate QoS based on user equipment assistance information UAI.

Based on this possible design, power consumption of the terminal may be different in different cases. Therefore, the activation duration of the candidate QoS may also be different. The terminal can flexibly send the UAI a plurality of times, and the terminal capability information can usually be sent only in response to a request of the RAN node. Therefore, based on power consumption of the terminal at different time, the activation duration of the candidate QoS may be flexibly updated by sending the UAI a plurality of times, to meet a quality of service requirement as much as possible while ensuring power consumption of the terminal, thereby improving service performance and user experience.

In a possible design, the reporting the at least one candidate QoS and the activation duration of the candidate QoS includes: receiving configuration information; and reporting the at least one candidate QoS and the activation duration of the candidate QoS based on the configuration information. For example, the configuration information indicates reporting of the at least one candidate QoS and the activation duration of the candidate QoS.

According to a second aspect, a quality of service-based data transmission method is provided. The method may be performed by a RAN node, or may be performed by a module (for example, a processor, a chip, or a chip system) used in the RAN node, or may be implemented by a logical node, a logical module, or software that can implement all or a part of functions of the RAN node. The method includes: obtaining at least one candidate QoS and an activation duration of the candidate QoS, where the at least one candidate QoS includes a first QoS, and the activation duration of the candidate QoS includes an activation duration of the first QoS; sending first information indicating the first QoS; and performing data transmission based on the first QoS in the activation duration of the first QoS. For technical effects brought by the second aspect, refer to the technical effects brought by the first aspect. Details are not described herein again.

In a possible design, start time of the activation duration of the first QoS is obtained based on sending time of the first information; or start time of the activation duration of the first QoS is obtained based on sending time of the first information and a hysteresis duration for QoS activation.

In a possible design, the obtaining the at least one candidate QoS includes: obtaining the at least one candidate QoS through terminal capability information.

In a possible design, the obtaining the activation duration of the candidate QoS includes: obtaining the activation duration of the candidate QoS based on user equipment assistance information UAI.

In a possible design, the method further includes: sending configuration information. The configuration information indicates reporting of the at least one candidate QoS and the activation duration of the candidate QoS.

According to a third aspect, a quality of service-based data transmission method is provided. The method may be performed by a terminal, or may be performed by a module (for example, a processor, a chip, or a chip system) used in the terminal, or may be implemented by a logical node, a logical module, or software that can implement all or a part of functions of the terminal. The method includes: reporting a minimum duration for QoS refresh; receiving first information indicating a first QoS; and performing data transmission based on the first QoS in the minimum duration for QoS refresh.

Based on this solution, the terminal may report the minimum duration for QoS refresh; and after a RAN node configures the first QoS, the terminal performs data transmission based on the first QoS in the minimum duration for QoS refresh. That is, in the minimum duration for QoS refresh, the terminal and the RAN node perform data transmission based on a QoS. In other words, in the minimum duration for QoS refresh, the QoS for data transmission performed by the terminal and the RAN node remains unchanged, to avoid a case in which the terminal cannot adjust the QoS in a timely manner due to frequent QoS changes, thereby reducing service stalling. In addition, the minimum duration for QoS refresh is reported by the terminal. Therefore, the terminal may flexibly adjust the minimum duration for QoS refresh with reference to a coding capability of the terminal and the like, so that the coding capability of the terminal can support frequent QoS adjustment, to accommodate service flexibility as much as possible, thereby improving service performance and user experience.

In a possible design, the method further includes: receiving second information indicating a second QoS; and performing data transmission based on the second QoS after the minimum duration for QoS refresh.

Based on this possible design, after the minimum duration for QoS refresh, the terminal can quickly support QoS adjustment. Therefore, data transmission may be performed based on the second QoS. When the second QoS can better ensure service quality, performing data transmission based on the second QoS can improve service performance, thereby improving user experience.

In a possible design, start time of the minimum duration for QoS refresh is obtained based on receiving time of the first information; or start time of the minimum duration for QoS refresh is obtained based on receiving time of the first information and a hysteresis duration for QoS activation.

Based on this possible design, the start time of the minimum duration for QoS refresh can be determined, and a specific time period in which data transmission is performed based on the first QoS can be specified, so that the QoS is not adjusted in the time period, to avoid a case in which the terminal cannot adjust the QoS in a timely manner due to frequent QoS changes, thereby reducing service stalling.

In a possible design, the reporting the minimum duration for QoS refresh includes: reporting, through terminal capability information, the minimum duration for QoS refresh.

Based on this possible design, the terminal capability information is usually sent before RRC reconfiguration. Therefore, the minimum duration for QoS refresh is reported based on the terminal capability information, so that the RAN node can learn of, as early as possible, the minimum duration for QoS refresh that is supported by the terminal to control a QoS adjustment frequency. In this way, the terminal can support QoS adjustment more quickly, and service stalling is reduced.

In a possible design, the reporting the minimum duration for QoS refresh includes: receiving configuration information; and reporting, based on the configuration information, the minimum duration for QoS refresh. For example, the configuration information indicates reporting of the minimum duration for QoS refresh.

According to a fourth aspect, a quality of service-based data transmission method is provided. The method may be performed by a RAN node, or may be performed by a module (for example, a processor, a chip, or a chip system) used in the RAN node, or may be implemented by a logical node, a logical module, or software that can implement all or a part of functions of the RAN node. The method includes: obtaining minimum duration for QoS refresh; sending first information indicating a first QoS; and performing data transmission based on the first QoS in the minimum duration for QoS refresh. For technical effects brought by the fourth aspect, refer to the technical effects brought by the third aspect. Details are not described herein again.

In a possible design, the method further includes: sending second information indicating a second QoS; and performing data transmission based on the second QoS after the minimum duration for QoS refresh.

In a possible design, start time of the minimum duration for QoS refresh is obtained based on sending time of the first information; or start time of the minimum duration for QoS refresh is obtained based on sending time of the first information and a hysteresis duration for QoS activation.

In a possible design, the obtaining the minimum duration for QoS refresh includes: obtaining, through terminal capability information, the minimum duration for QoS refresh.

In a possible design, the method further includes: sending configuration information. The configuration information indicates reporting of the minimum duration for QoS refresh.

According to a fifth aspect, a quality of service-based data transmission method is provided. The method may be performed by a terminal, or may be performed by a module (for example, a processor, a chip, or a chip system) used in the terminal, or may be implemented by a logical node, a logical module, or software that can implement all or a part of functions of the terminal. The method includes: reporting a hysteresis duration for QoS activation; receiving first information indicating a first QoS; and performing data transmission based on the first QoS after the hysteresis duration for QoS activation.

Based on this solution, the terminal may report the hysteresis duration for QoS activation; and after a RAN node configures the first QoS, the terminal performs data transmission based on the first QoS after the hysteresis duration for QoS activation. That is, after receiving QoS configuration, the terminal performs data transmission after the hysteresis duration. During the hysteresis duration, the terminal may perform related processing to prepare for subsequent data transmission based on the first QoS, so that the terminal can quickly support data transmission based on the first QoS after the hysteresis duration, thereby reducing service stalling and improving service performance and user experience. In addition, during the hysteresis duration for QoS activation, the terminal may alternatively perform data transmission based on a QoS on which QoS refresh is not performed. QoS refresh may be understood as that the RAN node indicates the first QoS, that is, before the first information is received, the RAN node may indicate another QoS (namely, the QoS on which QoS refresh is not performed) to the terminal, and before performing data transmission based on the first QoS, the terminal may perform data transmission based on the QoS.

In a possible design, start time of the hysteresis duration for QoS activation is obtained based on receiving time of the first information.

Based on this possible design, the start time of the hysteresis duration for QoS activation can be determined, and an earliest time point at which data transmission is performed based on the first QoS is specified, thereby avoiding service stalling caused by starting data transmission when the terminal cannot completely support the first QoS.

In a possible design, the reporting the hysteresis duration for QoS activation includes: reporting, through terminal capability information, the hysteresis duration for QoS activation.

In a possible design, the reporting the hysteresis duration for QoS activation includes: receiving configuration information; and reporting, based on the configuration information, the hysteresis duration for QoS activation. For example, the configuration information indicates reporting of the hysteresis duration for QoS activation.

According to a sixth aspect, a quality of service-based data transmission method is provided. The method may be performed by a RAN node, or may be performed by a module (for example, a processor, a chip, or a chip system) used in the RAN node, or may be implemented by a logical node, a logical module, or software that can implement all or a part of functions of the RAN node. The method includes: obtaining a hysteresis duration for QoS activation; sending first information indicating a first QoS; and performing data transmission based on the first QoS after the hysteresis duration for QoS activation. For technical effects brought by the sixth aspect, refer to the technical effects brought by the fifth aspect. Details are not described herein again.

In a possible design, start time of the hysteresis duration for QoS activation is obtained based on sending time of the first information.

In a possible design, the obtaining the hysteresis duration for QoS activation includes: obtaining, through terminal capability information, the hysteresis duration for QoS activation.

In a possible design, the method further includes: sending configuration information. The configuration information indicates reporting of the hysteresis duration for QoS activation.

According to a seventh aspect, a communication apparatus is provided, to implement various methods. The communication apparatus includes a corresponding module, the unit, or the means (means) for implementing the methods. The module, unit, or means may be implemented by hardware, software, or hardware executing corresponding software. The hardware or the software includes one or more modules or units corresponding to functions.

In some possible designs, the communication apparatus may include a processing module and a transceiver module. The processing module may be configured to implement a processing function in any one of the foregoing aspects and the possible implementations of the foregoing aspects. The transceiver module may include a receiving module and a sending module, respectively configured to implement a receiving function and a sending function in any one of the foregoing aspects and the possible implementations of the foregoing aspects.

In some possible designs, the transceiver module may include a transceiver circuit, a transceiver machine, a transceiver, or a communication interface.

According to an eighth aspect, a communication apparatus is provided. The communication apparatus includes a processor and a memory. The memory is configured to store computer instructions. When the processor executes the instructions, the communication apparatus is caused to perform the method according to any one of the aspects.

According to a ninth aspect, a communication apparatus is provided. The communication apparatus includes a processor and a communication interface. The communication interface is configured to communicate with a module other than the communication apparatus, and the processor is configured to execute a computer program or instructions, to cause the communication apparatus to perform the method according to any one of the aspects.

According to a tenth aspect, a communication apparatus is provided. The communication apparatus includes at least one processor. The processor is configured to execute a computer program or instructions stored in a memory, to cause the communication apparatus to perform the method according to any one of the aspects. The memory may be coupled to the processor, or may be independent of the processor.

According to an eleventh aspect, a communication apparatus is provided (for example, the communication apparatus may be a chip or a chip system). The communication apparatus includes a processor, configured to implement a function in any one of the first aspect to the sixth aspect.

In some possible designs, the communication apparatus includes a memory, and the memory is configured to store necessary program instructions and data.

In some possible designs, when the apparatus is a chip system, the apparatus may include a chip, or may include a chip and another discrete device.

It may be understood that the communication apparatus provided in each of the seventh aspect to the eleventh aspect may be the terminal in the first aspect, the third aspect, or the fifth aspect, or may be a module or a unit (for example, a chip, a chip system, or a circuit) that is in one-to-one correspondence with the methods/operations/steps/actions that are described in the first aspect, the third aspect, or the fifth aspect and that are performed by the terminal, or may be a module or a unit that can be used in combination with the terminal, or may be a logical node, a logical module, or software that can implement all or a part of functions of the terminal. Alternatively, the communication apparatus may be the RAN node in the second aspect, the fourth aspect, or the sixth aspect, or may be a module or a unit (for example, a chip, a chip system, or a circuit) that is in one-to-one correspondence with the methods/operations/steps/actions that are described in the second aspect, the fourth aspect, or the sixth aspect and that are performed by the RAN node, or may be a module or a unit that can be used in combination with the RAN node, or may be a logical node, a logical module, or software that can implement all or a part of functions of the RAN node.

It may be understood that, when the communication apparatus provided in any one of the seventh aspect to the eleventh aspect is a chip, a sending action/function of the communication apparatus may be understood as outputting information, and a receiving action/function of the communication apparatus may be understood as inputting information.

According to a twelfth aspect, a computer-readable storage medium is provided. The computer-readable storage medium stores a computer program or instructions. When the computer program or the instructions are run on a communication apparatus, the communication apparatus is caused to perform the method according to any one of the first aspect to the sixth aspect.

According to a thirteenth aspect, a computer program product including instructions is provided. When the computer program product runs on a communication apparatus, the communication apparatus is caused to perform the method according to any one of the first aspect to the sixth aspect.

According to a fourteenth aspect, a communication system is provided. The communication system includes a terminal and a RAN node. The terminal is configured to perform the method according to any one of the first aspect, the third aspect, or the fifth aspect, and the possible designs of the first aspect, the third aspect, or the fifth aspect, and the RAN node is configured to perform the method according to any one of the second aspect, the fourth aspect, or the sixth aspect, and the possible designs of the second aspect, the fourth aspect, or the sixth aspect.

For technical effects brought by any design in the seventh aspect to the fourteenth aspect, refer to the technical effects brought by different designs in the first aspect to the sixth aspect. Details are not described herein again.

### BRIEF DESCRIPTION OF DRAWINGS

FIG. 1 is a diagram of arrival time of a video frame according to this application;
FIG. 2 is a diagram of an architecture of a communication system according to this application;
FIG. 3 to FIG. 8 are schematic flowcharts of quality of service-based data transmission methods according to this application; and
FIG. 9 to FIG. 11 are diagrams of structures of communication apparatuses according to this application.

### DESCRIPTION OF EMBODIMENTS

In descriptions of this application, "/" represents an "or" relationship between associated objects unless otherwise specified. For example, A/B may represent A or B. In this application, "and/or" describes only an association relationship for describing associated objects and represents that three relationships may exist. For example, A and/or B may represent the following three cases: Only A exists, both A and B exist, and only B exists, where A and B may be singular or plural.

In addition, in the descriptions of this application, "a plurality of" means two or more unless otherwise specified. "At least one of the following items (pieces)" or a similar expression thereof means any combination of these items, including any combination of singular items (pieces) or plural items (pieces). For example, at least one item (piece) of a, b, or c may indicate: a, b, c, a and b, a and c, b and c, or a, b, and c, where a, b, and c may be singular or plural.

In addition, to clearly describe technical solutions in embodiments of this application, terms such as first and second are used in embodiments of this application to distinguish between same items or similar items that provide basically same functions or purposes. A person skilled in the art may understand that the terms such as "first" and "second" do not limit a quantity or an execution sequence, and the terms such as "first" and "second" do not indicate a definite difference.

In embodiments of this application, the word "example" or "for example" is used to represent giving an example, an illustration, or a description. Any embodiment or design scheme described as an "example" or "for example" in embodiments of this application should not be explained as being more preferred or having more advantages than another embodiment or design scheme. Exactly, use of the term such as "example" or "for example" is intended to present a related concept in a specific manner for ease of understanding.

It may be understood that an "embodiment" used throughout this specification means that particular features, structures, or characteristics related to this embodiment are included in at least one embodiment of this application. Therefore, embodiments in the entire specification are not necessarily a same embodiment. In addition, these particular features, structures, or characteristics may be combined in one or more embodiments in any appropriate manner. It may be understood that sequence numbers of the processes do not mean execution sequences in various embodiments of this application. The execution sequences of the processes should be determined based on functions and internal logic of the processes, and should not be construed as any limitation on implementation processes of embodiments of this application.

It may be understood that, in this application, "when" and "if" mean that corresponding processing is performed in an objective situation, are not intended to limit time, do not require a determining action during implementation, and do not mean any other limitation.

It may be understood that, in some scenarios, some optional features in embodiments of this application may be independently implemented without depending on another feature, for example, a solution on which the optional features are currently based, to resolve a corresponding technical problem and achieve corresponding effects. Alternatively, in some scenarios, the optional features may be combined with another feature based on a requirement. Correspondingly, the apparatus provided in embodiments of this application may also correspondingly implement these features or functions. Details are not described herein.

In this application, unless otherwise specified, mutual reference may be made between same or similar parts of various embodiments. In various embodiments of this application, unless otherwise specified or there is a logic conflict, terms and/or descriptions in different embodiments are consistent and may be mutually referenced, and technical features in the different embodiments may be combined based on an internal logical relationship thereof, to form a new embodiment. The following implementations of this application do not constitute a limitation on the protection scope of this application.

With a rapid increase in a communication transmission rate, a real-time video transmission service has gradually become one of core services in a current network. In addition, continuous advancement and improvement of extended reality (extended reality, XR) technologies have fueled flourishing development of related industries. For example, as one of the XR technologies, a virtual reality (virtual reality, VR) technology has entered various fields closely related to production and daily life, such as education, entertainment, healthcare, environmental protection, transportation, and public health. In comparison with a conventional video service, the VR technology offers advantages such as multi-perspective viewing and high interactivity, providing users with a brand-new visual experience. Moreover, the XR technologies further include an augmented reality (augmented reality, AR) technology.

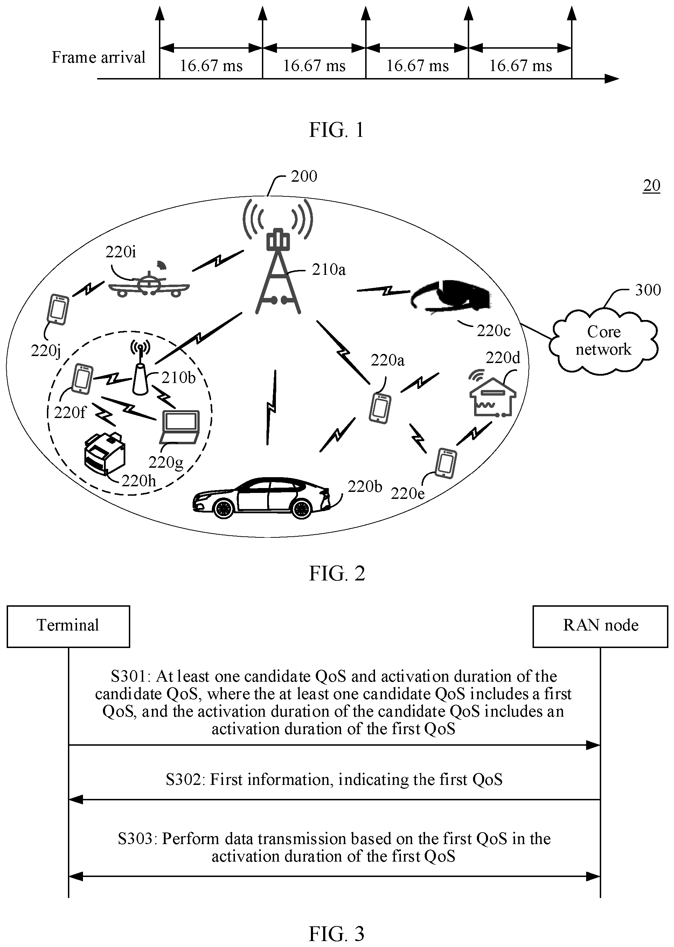

For example, service models of an XR service and a video transmission service may be summarized as a periodic service based on a frame rate. As shown in FIG. 1, for a video with a frame rate of 60 frames per second (frames per second, FPS), in an ideal case, one picture frame arrives at an interval of 16.67 milliseconds (milliseconds, ms).

With development of the XR service, XR devices become increasingly diversified and lightweight. For example, the XR device may be a head mounted display (head mounted display, HMD) or smart glasses (such as VR glasses or AR glasses). However, a form factor of the smart glasses is very small, and is almost comparable to that of prescription glasses, and a user may wear the smart glasses for a long period of time; or for a long-time game experience, the head mounted display may also need to be worn for a long period of time. Therefore, for the increasingly lightweight XR device, power consumption and endurance time are important aspects to be considered.

In a case of limited bandwidth resources in a wireless communication system, bandwidth can be allocated to various services based on a quality of service (quality of service, QoS), providing end-to-end quality of service assurance for the services. For example, services such as voices, videos, or critical data applications can be prioritized for a service through QoS configuration.

A QoS model of a 5th generation (5th generation, 5G) communication system is based on a QoS flow (flow). A QoS flow identifier (QoS flow ID, QFI) is used to identify a QoS flow in the 5G system. The QFI may be dynamically configured or equal to a 5G QoS identifier (5G QoS identifier, 5QI). The 5QI may be used as a reference of a 5G QoS feature, and different values of the 5QI correspond to different 5G QoS features. For example, a correspondence between the different values of the 5QI and the different 5G QoS features may be shown in Table 1.

**Table 1**

| Value of a 5QI | Resource type | Default priority | Packet delay budget (packet delay budget, PDB) | Packet error rate (packet error rate, PER) | Default averaging window (default averaging window) |
|---|---|---|---|---|---|
| 1 | | 20 | 100 ms | 10⁻² | 2000 ms |
| 2 | Guaranteed bit rate (guaranteed bit rate, GBR) | 40 | 150 ms | 10⁻² | 2000 ms |
| 3 | | 30 | 50 ms | 10⁻³ | 2000 ms |
| 4 | | 50 | 300 ms | 10⁻⁶ | 2000 ms |
| 65 | | 7 | 75 ms | 10⁻² | 2000 ms |

Usually, a base station may configure a QoS based on a service requirement, a service cycle, and the like. However, a current QoS configuration manner may cause a terminal to fail to completely support QoS adjustment, affecting service performance and degrading user experience.

For example, to meet a high quality of service requirement, the base station may configure a high QoS for a long period of time. However, a higher QoS may result in higher power consumption of the terminal. If a high QoS is maintained for a long period of time, this may lead to increased power consumption and reduced battery endurance of the terminal. For a terminal (such as an XR device) whose power consumption and endurance capability need to be considered, QoS configuration may be inconsistent with a power consumption support capability of the terminal. For another example, with increasing service flexibility, the base station may frequently adjust the QoS. However, a coding capability of the terminal may not support QoS adjustment at an excessively high frequency. Consequently, the terminal cannot quickly support a target QoS configured by the base station, leading to service stalling.

In view of this, this application provides a quality of service-based data transmission method. In the method, a terminal may report at least one candidate QoS and an activation duration of the candidate QoS; and if a base station subsequently configures a candidate QoS, the terminal and the base station may perform data transmission based on the QoS in an activation duration of the QoS. To be specific, a duration for which the terminal and the base station perform data transmission based on a QoS may be specified. When the QoS is high, the terminal and the base station may be prevented from performing data transmission based on the high QoS for a long period of time, thereby reducing power consumption of the terminal. In addition, an activation duration of the QoS is reported by the terminal. Therefore, the terminal may flexibly adjust the activation duration with reference to a power consumption support capability of the terminal, to meet a quality of service requirement as much as possible while ensuring power consumption of the terminal, thereby improving service performance and user experience.

Alternatively, the terminal may report a minimum duration for QoS refresh; and after the base station configures a QoS, the terminal and the base station perform data transmission based on the QoS in the minimum duration for QoS refresh. That is, in the minimum duration for QoS refresh, the terminal and the base station perform data transmission based on a QoS. In other words, in the minimum duration for QoS refresh, the QoS for data transmission performed by the terminal and the base station remains unchanged, to avoid a case in which the terminal cannot adjust the QoS in a timely manner due to frequent QoS changes, thereby reducing service stalling. In addition, the minimum duration for QoS refresh is reported by the terminal. Therefore, the terminal may flexibly adjust the minimum duration for QoS refresh with reference to a coding capability of the terminal and the like, so that the coding capability of the terminal can support frequent QoS adjustment, to accommodate service flexibility as much as possible, thereby improving service performance and user experience.

The technical solutions in embodiments of this application may be applied to various communication systems. The communication system may be a third generation partnership project (third generation partnership project, 3GPP) communication system, for example, a 4th generation (4th generation, 4G) system such as a long-term evolution (long-term evolution, LTE) system, a 5G system such as a new radio (new radio, NR) system, an LTE and 5G hybrid networking system, a non-terrestrial network (non-terrestrial network, NTN), or another next-generation communication system. Alternatively, the communication system may be a non-3GPP communication system. This is not limited.

The foregoing communication systems to which this application is applicable are merely examples for description, and the communication systems to which this application is applicable are not limited thereto. The communication systems provided in this application constitute no limitation on the solutions of this application. This applies throughout and will not be repeated below.

FIG. 2 is a diagram of a possible and non-limitative system. As shown in FIG. 2, the communication system 20 includes a radio access network (radio access network, RAN) 200 and a core network (core network, CN) 300. The RAN 200 includes at least one RAN node (for example, 210a and 210b in FIG. 1, collectively referred to as 210) and at least one terminal (for example, 220a to 220j in FIG. 1, collectively referred to as 220). The RAN 200 may further include another RAN node, for example, a wireless relay device and/or a wireless backhaul device (not shown in FIG. 2). The terminal 220 is connected to the RAN node 210 in a wireless manner. The RAN node 210 is connected to the core network 300 in a wireless or wired manner. A core network device in the core network 300 and the RAN node 210 in the RAN 200 may be different physical devices, or may be a same physical device that integrates a logical function of the core network and a logical function of the radio access network.

The RAN 200 may be a 3GPP-related cellular system, for example, a 4G or 5G mobile communication system or a future-oriented evolved system (for example, a 6th generation (6th generation, 6G) mobile communication system). The RAN 200 may alternatively be an open access network (open RAN, O-RAN or ORAN), a cloud radio access network (cloud radio access network, CRAN), or a wireless fidelity (wireless fidelity, Wi-Fi) system. The RAN 200 may alternatively be a communication system that integrates two or more of the foregoing systems.

The RAN node 210 may also be sometimes referred to as an access network device, a RAN entity, an access node, or the like, and forms a part of the communication system, to help the terminal implement radio access. A plurality of RAN nodes 210 in the communication system 10 may be nodes of a same type, or may be nodes of different types. In some scenarios, roles of the RAN node 210 and the terminal 220 are relative. For example, the network element 220i in FIG. 2 may be a helicopter or an uncrewed aerial vehicle, and may be configured as a mobile base station. For the terminal 220j that accesses the RAN 200 through the network element 220i, the network element 220i is a base station. However, for the base station 210a, the network element 220i is a terminal. The RAN node 210 and the terminal 220 are sometimes both referred to as communication apparatuses. For example, in FIG. 2, the network elements 210a and 210b may be understood as communication apparatuses having a base station function, and the network elements 220a to 220j may be understood as communication apparatuses having a terminal function.

In a possible scenario, the RAN node may be a base station (base station), an evolved NodeB (evolved NodeB, eNodeB), an access point (access point, AP), a transmission reception point (transmission reception point, TRP), a next-generation NodeB (next-generation NodeB, gNB), a next-generation base station in a 6G mobile communication system, a base station in a future mobile communication system, an access node in a Wi-Fi system, or the like. The RAN node may be a macro base station (for example, 210a in FIG. 2), a micro base station or an indoor station (for example, 210b in FIG. 2), a relay node or a donor node, or a radio controller in a CRAN scenario. Optionally, the RAN node may alternatively be a server, a wearable device, a vehicle, a vehicle-mounted device, or the like. For example, an access network device in a vehicle-to-everything (vehicle-to-everything, V2X) technology may be a roadside unit (roadside unit, RSU). All or a part of functions of the RAN node in this application may alternatively be implemented by using a software function running on hardware, or may be implemented by using a virtualization function instantiated on a platform (for example, a cloud platform). Alternatively, the RAN node in this application may be a logical node, a logical module, or software that can implement all or a part of functions of the RAN node.

In another possible scenario, the plurality of RAN nodes coordinate to assist the terminal in implementing radio access, and different RAN nodes separately implement a part of functions of the base station. For example, the RAN node may be a central unit (central unit, CU), a distributed unit (distributed unit, DU), a CU-control plane (control plane, CP), a CU-user plane (user plane, UP), or a radio unit (radio unit, RU). The CU and the DU may be separately disposed, or may be included in a same network element, for example, in a baseband unit (baseband unit, BBU). The RU may be included in a radio frequency device or a radio frequency unit, for example, included in a remote radio unit (remote radio unit, RRU), an active antenna processing unit (active antenna unit, AAU), or a remote radio head (remote radio head, RRH).

In different systems, the CU (or the CU-CP and the CU-UP), the DU, or the RU may have different names, but a person skilled in the art may understand meanings thereof. For example, in an ORAN system, the CU may also be referred to as an O-CU (open CU), the DU may also be referred to as an O-DU, the CU-CP may also be referred to as an O-CU-CP, the CU-UP may also be referred to as an O-CU-UP, and the RU may also be referred to as an O-RU. For ease of description, the CU, the CU-CP, the CU-UP, the DU, and the RU are used as examples for description in this application. Any one of the CU (or the CU-CP and the CU-UP), the DU, and the RU in this application may be implemented by using a software module, a hardware module, or a combination of a software module and a hardware module.

The terminal may also be referred to as a terminal device, user equipment (user equipment, UE), a mobile station, a mobile terminal, or the like. The terminal may be widely used in various scenarios, for example, device-to-device (device-to-device, D2D) communication, vehicle-to-everything (vehicle-to-everything, V2X) communication, machine type communication (machine type communication, MTC), an internet of things (internet of things, IoT), virtual reality, augmented reality, industrial control, autonomous driving, telemedicine, a smart grid, smart furniture, a smart office, a smart wearable, smart transportation, and a smart city. The terminal may be a mobile phone, a tablet computer, a computer having a wireless transceiver function, a wearable device, a vehicle, an uncrewed aerial vehicle, a helicopter, an airplane, a ship, a robot, a robot arm, a smart home device, or the like. A device form of the terminal is not limited in embodiments of this application.

It should be noted that the communication system described in embodiments of this application is intended to describe the technical solutions in embodiments of this application more clearly, but does not constitute a limitation on the technical solutions provided in embodiments of this application. It can be learned by a person of ordinary skill in the art that the technical solutions provided in embodiments of this application are also applicable to similar technical problems with evolution of a network architecture and emergency of a new service scenario.

With reference to the communication system shown in FIG. 2, the following describes a quality of service-based data transmission method provided in an embodiment of this application by using interaction between a terminal and a RAN node as an example. It should be noted that names of messages between the terminal and the RAN node, names of parameters, names of various pieces of information, or the like in the following embodiments of this application are merely examples, and may alternatively be other names in another embodiment. This is not specifically limited in the method provided in this application.

It may be understood that, in embodiments of this application, the terminal or the RAN node may perform a part or all of the steps in embodiments of this application, and these steps or operations are merely examples. In embodiments of this application, other operations or various operation variants may be further performed. In addition, the steps may be performed in a sequence different from a sequence presented in embodiments of this application, and it is possible that not all operations in embodiments of this application need to be performed.

It may be understood that, in this application, an example in which the RAN node and the terminal are used as execution bodies of an interaction illustration is used for description. However, an execution body of the interaction illustration is not limited in this application. For example, the method performed by the RAN node in this application may alternatively be performed by a module (for example, a chip, a chip system, or a processor) used in the RAN node, or may be implemented by a logical node, a logical module, or software that can implement all or a part of functions of the RAN node; and the method performed by the terminal in this application may alternatively be performed by a module (for example, a chip, a chip system, or a processor) used in the terminal, or may be implemented by a logical node, a logical module, or software that can implement all or a part of functions of the terminal.

In addition, "sending information" in this application may be understood as that a device sends information to another device, or may be understood as that a logical module in a device sends information to another logical module. For example, "the RAN node sends information" may be understood as that the RAN node sends information to another device (for example, the terminal), or may be understood as that a logical module 1 (for example, a processing module) in the RAN node sends information to a logical module 2 (for example, a transceiver module) in the RAN node.

In this application, "receiving information" may be understood as that a device receives information from another device, or may be understood as that a logical module in a device receives information from another logical module. For example, "the terminal receives information" may be understood as that the terminal receives information from another device (for example, the RAN node), or may be understood as that a logical module 1 (for example, a processing module) in the terminal receives information from a logical module 2 (for example, a transceiver module) in the terminal.

In this application, "sending information to... (for example, a terminal)" or a related illustration in the accompanying drawings may be understood as that a destination end of the information is the terminal, and may include directly or indirectly sending the information to the terminal. "Receiving information from... (for example, a RAN node)", "receiving information sent by (for example, a RAN node)", or a related illustration in the accompanying drawings may be understood as that a source end of the information is the RAN node, and may include directly or indirectly receiving the information from the RAN node. Necessary processing, for example, a format change, may be performed on the information between the source end and the destination end to which the information is sent, but the destination end can understand valid information from the source end. A similar expression in this application may be understood similarly, and details are not described herein again.

FIG. 3 is a flowchart of a quality of service-based data transmission method according to an embodiment of this application. The method may include the following steps.

S301: A terminal reports at least one candidate QoS and an activation duration of the candidate QoS; and correspondingly, a RAN node obtains the at least one candidate QoS and the activation duration of the candidate QoS.

In a possible implementation, step S301 may be implemented as follows: The terminal sends, to the RAN node, information indicating the at least one candidate QoS and the activation duration of the candidate QoS, and the RAN node receives the information indicating the at least one candidate QoS and the activation duration of the candidate QoS from the terminal.

Optionally, when the terminal reports a plurality of candidate QoSs, QoSs of a same type but with different values may exist in the plurality of candidate QoSs. For example, the terminal may report a packet delay budget 1, a frame rate 1, a frame rate 2, and a frame rate 3, or the terminal may report a frame rate 1, a frame rate 2, and a frame rate 3. The frame rate 1, the frame rate 2, and the frame rate 3 are of a same type but have different values.

In a possible implementation, the terminal may report a QoS identifier, and indicate the at least one candidate QoS based on the QoS identifier. For example, the terminal may report an index indication that corresponds to a 5QI, a QFI, or a QoS. A value of the index indication that corresponds to the 5QI, the QFI, or the QoS may indicate a group of QoSs. For example, QoSs indicated by the 5QI may be shown in Table 1. A QoS corresponding to the index indication that corresponds to the 5QI, the QFI, or the QoS may be pre-defined in a protocol, or may be pre-negotiated by the terminal and the RAN node. This is not limited.

Optionally, the terminal may report identifiers of a plurality of QoSs, to indicate a plurality of groups of QoSs. For example, the terminal reports a 5QI 1 and a 5QI 2, and the 5QI 1 and the 5QI 2 respectively indicate QoSs of different values. For example, the 5QI 1 indicates a packet delay budget 1 and a frame rate 1, and the 5QI 2 indicates a packet delay budget 2 and a frame rate 2.

In another possible implementation, the terminal may explicitly report the candidate QoS. For example, the terminal reports one or a combination of a plurality of the following: a rate, a frame rate, a packet delay budget, and transmission reliability. For example, the terminal reports a rate 1, or reports a packet delay budget 1, or reports a rate 1 and a frame rate 1, or reports a rate 1 (for example, 30 megabits per second (megabits per second, Mbps)), a rate 2 (for example, 15 Mbps), or a rate 3 (for example, 5 Mbps).

In a possible implementation, the activation duration of the candidate QoS may also be understood as a maximum duration for which the terminal can support the candidate QoS. An activation duration of a candidate QoS may be related to the candidate QoS and/or power consumption of the terminal. For example, a higher candidate QoS may require higher power consumption. Therefore, the activation duration of the candidate QoS is shorter. For example, an activation duration of 30 Mbps is 5 ms, an activation duration of 15 Mbps is 10 ms, and an activation duration of 5 Mbps is 5 ms.

It may be understood that the candidate QoS and the activation duration of the candidate QoS are merely examples, and a value of the candidate QoS and a value of the activation duration of the candidate QoS are not specifically limited in this application.

In a possible implementation, the terminal may report the at least one candidate QoS and the activation duration of the candidate QoS in one piece of information or one message, that is, report a correspondence between the candidate QoS and the activation duration of the candidate QoS in the piece of information or the message. The information or the message may be, for example, terminal capability information (also referred to as UE capability information), user equipment assistance information (UE assistance information, UAI), or other uplink information or messages such as uplink control information (uplink control information, UCI).

For example, the information or the message may include (candidate QoS 1, activation duration 1), (candidate QoS 2, activation duration 2), and (candidate QoS 3, activation duration 3), indicating that an activation duration of the candidate QoS 1 is the activation duration 1, an activation duration of the candidate QoS 2 is the activation duration 2, and an activation duration of the candidate QoS 3 is the activation duration 3.

For another example, the information or the message may include (candidate QoS 1, candidate QoS 2, candidate QoS 3) and (activation duration 1, activation duration 2, activation duration 3). The candidate QoSs and the activation durations sequentially correspond to one another in a front-to-back order. That is, an activation duration of the candidate QoS 1 is the activation duration 1, an activation duration of the candidate QoS 2 is the activation duration 2, and an activation duration of the candidate QoS 3 is the activation duration 3. Alternatively, after a plurality of candidate QoSs are sorted in descending order, and a plurality of activation durations are sorted in ascending order, candidate QoSs and activation durations with same rankings correspond to one another. That is, a highest QoS corresponds to a shortest activation duration, and a lowest QoS corresponds to a longest activation duration.

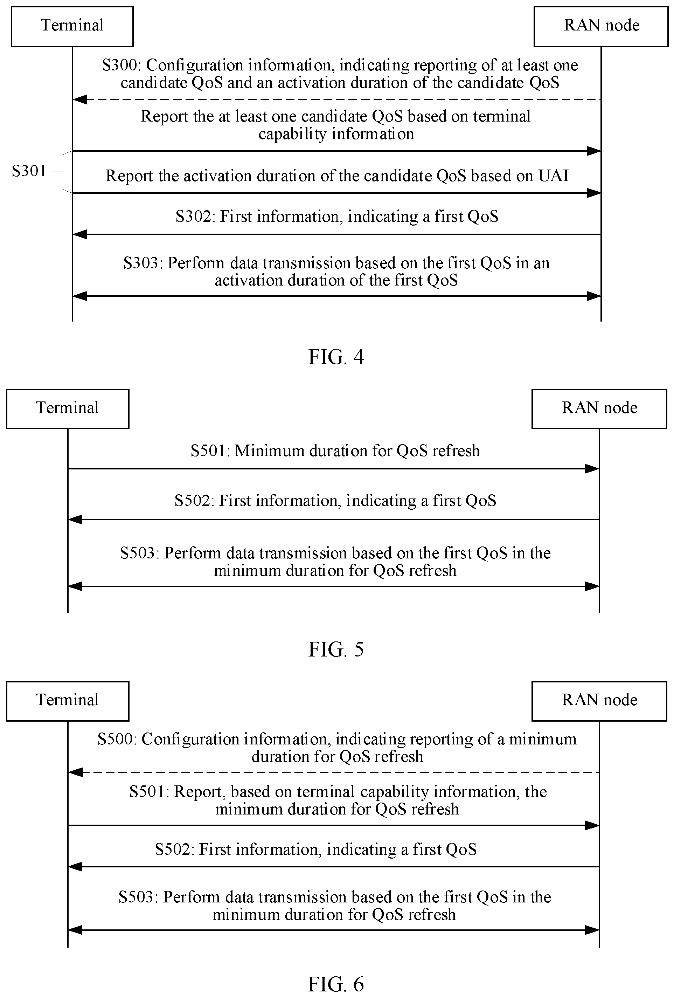

In another possible implementation, the terminal may separately report the at least one candidate QoS and the activation duration of the candidate QoS through different information. For example, as shown in FIG. 4, the terminal may report the at least one candidate QoS based on the terminal capability information, and/or report the activation duration of the candidate QoS based on the UAI. Correspondingly, the RAN node obtains the at least one candidate QoS based on the terminal capability information, and/or obtains the activation duration of the candidate QoS based on the UAI.

Optionally, the candidate QoS and the activation duration that are reported through the different information sequentially correspond to one another in a reporting sequence. For example, if the terminal reports (candidate QoS 1, candidate QoS 2, candidate QoS 3) based on the terminal capability information and reports (activation duration 1, activation duration 2, activation duration 3) based on the UAI, an activation duration of the candidate QoS 1 is the activation duration 1, an activation duration of the candidate QoS 2 is the activation duration 2, and an activation duration of the candidate QoS 3 is the activation duration 3.

Alternatively, after a plurality of candidate QoSs reported by the terminal are sorted in descending order, and a plurality of reported activation durations are sorted in ascending order, candidate QoSs and activation durations with same rankings correspond to one another. That is, a highest QoS corresponds to a shortest activation duration, and a lowest QoS corresponds to a longest activation duration. For example, if the terminal reports three rates, namely, 30 Mbps, 5 Mbps, and 15 Mbps, and reports three activation durations, namely, 5 ms, 15 ms, and 10 ms, reordered candidate QoSs are 30 Mbps, 15 Mbps, and 5 Mbps, and reordered activation durations are 5 ms, 10 ms, and 15 ms, an activation duration of 30 Mbps is 5 ms, an activation duration of 15 Mbps is 10 ms, and an activation duration of 5 Mbps is 15 ms.

It should be noted that, in this application, a quantity of candidate QoSs reported by the terminal is not limited to being the same as a quantity of activation durations reported by the terminal. When activation durations of a plurality of candidate QoSs are the same, the terminal may report one duration. For example, the terminal reports (rate 1, frame rate 1: activation duration 1), indicating that activation durations of both the rate 1 and the frame rate 1 are the activation duration 1. Alternatively, the terminal may set an activation duration of a part of candidate QoSs to a default value. In this case, it is considered that the activation duration of the part of the candidate QoSs is the default value. The default value may be defined in a protocol, or may be pre-negotiated by the terminal and the RAN node. This is not limited.

In a possible implementation, the terminal may actively report the at least one candidate QoS and/or the activation duration of the candidate QoS. For example, after establishing an RRC connection to the RAN node, the terminal may actively report the at least one candidate QoS and/or the activation duration of the candidate QoS based on the terminal capability information.

In another possible implementation, the terminal may report the at least one candidate QoS and/or the activation duration of the candidate QoS based on configuration of the RAN node. In this scenario, as shown in FIG. 4, before step S301, the method further includes step S300 below. Correspondingly, step S301 may be replaced with S301'.

S300: The RAN node sends configuration information to the terminal; and correspondingly, the terminal receives the configuration information from the RAN node.

The configuration information indicates reporting of the at least one candidate QoS and/or the activation duration of the candidate QoS. Alternatively, it may be understood that the configuration information indicates that reporting of the at least one candidate QoS and/or the activation duration of the candidate QoS is allowed, or the configuration information indicates that the terminal needs to report the at least one candidate QoS and/or the activation duration of the candidate QoS.

Certainly, the RAN node may alternatively send the configuration information to the terminal, to indicate that reporting of the at least one candidate QoS and/or the activation duration of the candidate QoS is not allowed, or indicate that the terminal does not need to report the at least one candidate QoS and/or the activation duration of the candidate QoS. This application is described by using an example in which the RAN node indicates reporting of the at least one candidate QoS and/or the activation duration of the candidate QoS.

S301': The terminal reports the at least one candidate QoS and/or the activation duration of the candidate QoS based on the configuration information.

For example, the configuration information may be carried in an RRC message, for example, carried in an RRC reconfiguration (RRCReconfiguration) message. Further, the configuration information may be carried in an other configuration (OtherConfig) information element of the RRC reconfiguration message.

S302: The RAN node sends first information to the terminal; and correspondingly, the terminal receives the first information from the RAN node.

The first information indicates a first QoS. The at least one candidate QoS reported by the terminal in step S301 includes the first QoS, and the activation duration that is of the candidate QoS and that is reported by the terminal in step S301 includes an activation duration of the first QoS.

In a possible implementation, the RAN node may select the first QoS from the at least one candidate QoS based on the at least one candidate QoS reported by the terminal and at least one of a channel state, a resource allocation condition, and a historical transmission state.

For example, when the terminal reports different values of QoSs of a same type, the first QoS may be a highest value of the QoSs of this type that can be supported in a current actual situation. For example, when the terminal reports three rates, namely, 30 Mbps, 15 Mbps, and 5 Mbps, if configuring 30 Mbps is not supported but configuring 15 Mbps and 5 Mbps is supported in a current actual situation, the first QoS may be 15 Mbps.

In a possible implementation, the first information may be carried in any one of the following: downlink control information (downlink control information, DCI), a media access control (media access control, MAC) control element (control information, CE), or RRC signaling.

S303: The terminal and the RAN node perform data transmission based on the first QoS in the activation duration of the first QoS.

Data transmission may include uplink data transmission and/or downlink data transmission. In uplink data transmission, the terminal sends information to the RAN node; and correspondingly, the RAN node receives the information from the terminal. In downlink data transmission, the RAN node sends information to the terminal; and correspondingly, the terminal receives the information from the RAN node.

In a possible implementation, start time of the activation duration of the first QoS is obtained based on receiving time (or sending time) of the first information. For example, the start time of the activation duration of the first QoS is equal to the receiving time (or the sending time) of the first information, or the start time of the activation duration of the first QoS is time obtained by offsetting the receiving time (or the sending time) of the first information by a period of time.

In another possible implementation, start time of the activation duration of the first QoS is obtained based on receiving time (or sending information) of the first information and a hysteresis duration for QoS activation. For example, the start time of the activation duration of the first QoS is equal to t+T. t represents the receiving time (or the sending time) of the first information, and T represents the hysteresis duration for QoS activation.

For example, in the foregoing two implementations, for the terminal, the start time of the activation duration of the first QoS is determined based on the receiving time of the first information; and for the RAN node, the activation duration of the first QoS is determined based on the sending time of the first information.

Optionally, the hysteresis duration for QoS activation may be understood as a processing delay from time when the terminal receives information indicating a QoS or configuration information of a QoS to time when the terminal can perform data transmission based on the QoS.

Optionally, the hysteresis duration for QoS activation may also be referred to as a delay for QoS activation, a delay for QoS configuration activation, a hysteresis duration for QoS configuration activation, an activation delay for QoS adjustment, an activation delay for QoS refresh, a hysteresis duration for QoS adjustment, a hysteresis duration for QoS refresh, or the like, and may be replaced with each other. This is not specifically limited in this application.

Optionally, before step S303, the terminal may report the hysteresis duration for QoS activation, so that the RAN node determines start time for performing data transmission based on the first QoS.

For example, the hysteresis duration for QoS activation and the at least one candidate QoS and/or the activation duration of the candidate QoS may be reported in one message, or may be separately reported in different messages. This is not specifically limited in this application.

In a possible implementation, that the terminal and the RAN node perform data transmission based on the first QoS in the activation duration of the first QoS may include: The terminal and the RAN node perform data transmission based on the first QoS in all of the activation duration of the first QoS, that is, a duration for which the terminal and the RAN node perform data transmission based on the first QoS is equal to the activation duration of the first QoS; or the terminal and the RAN node perform data transmission based on the first QoS in a part of the activation duration of the first QoS, where the part of the activation duration may be a continuous duration, or may be several discontinuous durations, that is, a duration for which the terminal and the RAN node perform data transmission based on the first QoS is less than the activation duration of the first QoS.

Optionally, a case in which the terminal and the RAN node perform data transmission based on the first QoS in the part of the activation duration of the first QoS may include: The terminal and the RAN node perform data transmission based on the first QoS in a first duration of the activation duration of the first QoS; and the terminal and the RAN node perform data transmission based on a second QoS in a second duration of the activation duration of the first QoS.

The first duration is before the second duration, the first duration and the second duration do not overlap, and the second QoS may be indicated by the RAN node to the terminal after the start time of the activation duration of the first QoS and before the second duration. An interval between start time of the second duration and start time of the first duration is greater than or equal to a minimum duration for QoS refresh.

For example, the minimum duration for QoS refresh may be understood as a minimum duration or a minimum time interval between start time when data transmission is performed based on a QoS and start time when data transmission is performed based on another QoS, or a minimum duration or a minimum time interval between two QoS indications performed by the RAN node.

For example, the minimum duration for QoS refresh may also be referred to as a minimum duration for QoS adjustment, a minimum time interval for QoS refresh, a minimum time interval for QoS adjustment, a highest/maximum frequency for QoS adjustment, or a highest/maximum frequency for QoS refresh, and may be replaced with each other. This is not specifically limited in this application.

Optionally, the minimum duration for QoS refresh is related to a coding capability of the terminal. For example, when the coding capability of the terminal is strong, the minimum duration for QoS refresh is short; or when the coding capability of the terminal is weak, the minimum duration for QoS refresh is long.

In a possible implementation, after the activation duration of the first QoS ends (or expires), the terminal and the RAN node stop using the first QoS for data transmission. If data transmission still needs to be performed after the activation duration of the first QoS, the terminal and the RAN node may perform data transmission based on a third QoS in an activation duration of the third QoS.

Optionally, the third QoS may be indicated by the RAN node to the terminal in the activation duration of the first QoS, or may be indicated by the RAN node to the terminal after the activation duration of the first QoS. This is not specifically limited in this application.

Optionally, when the RAN node indicates the third QoS to the terminal in the activation duration of the first QoS, start time of the activation duration of the third QoS may be end time of the activation duration of the first QoS, or may be time obtained by offsetting end time of the activation duration of the first QoS by the hysteresis duration for QoS activation. When the RAN node indicates the third QoS to the terminal after the activation duration of the first QoS, start time of the activation duration of the third QoS may be receiving time of information indicating the third QoS, or may be obtained based on the receiving time of the information indicating the third QoS and the hysteresis duration for QoS activation.

Based on the foregoing solution, the terminal may report the at least one candidate QoS and the activation duration of the candidate QoS; and if the RAN node subsequently configures a candidate QoS, the terminal and the RAN node may perform data transmission based on the QoS in an activation duration of the QoS. To be specific, a duration for which the terminal and the RAN node perform data transmission based on a QoS may be specified. When the QoS is high, the terminal and the RAN node may be prevented from performing data transmission based on the high QoS for a long period of time, thereby reducing power consumption of the terminal. In addition, an activation duration of the QoS is reported by the terminal. Therefore, the terminal may flexibly adjust the activation duration with reference to a power consumption support capability of the terminal, to meet a quality of service requirement as much as possible while ensuring power consumption of the terminal, thereby improving service performance and user experience.

In addition to the method shown in FIG. 3 and FIG. 4, this application further provides a quality of service-based data transmission method. As shown in FIG. 5, the method includes the following steps.

S501: A terminal reports a minimum duration for QoS refresh; and correspondingly, a RAN node obtains the minimum duration for QoS refresh.

In a possible implementation, step S501 may be implemented as follows: The terminal sends, to the RAN node, information indicating the minimum duration for QoS refresh, and the RAN node receives the information indicating the minimum duration for QoS refresh from the terminal.

In a possible implementation, the minimum duration for QoS refresh may be understood as a minimum duration or a minimum time interval between start time when data transmission is performed based on a QoS and start time when data transmission is performed based on another QoS, or a minimum duration or a minimum time interval between two QoS indications performed by the RAN node.

For example, the minimum duration for QoS refresh may also be referred to as a minimum duration for QoS adjustment, a minimum time interval for QoS refresh, a minimum time interval for QoS adjustment, a highest/maximum frequency for QoS adjustment, or a highest/maximum frequency for QoS refresh, and may be replaced with each other. This is not specifically limited in this application.

Optionally, the minimum duration for QoS refresh is related to a coding capability of the terminal. For example, when the coding capability of the terminal is strong, the minimum duration for QoS refresh is short; or when the coding capability of the terminal is weak, the minimum duration for QoS refresh is long.

In a possible implementation, the terminal may implicitly report the minimum duration for QoS refresh. For example, the information indicating the minimum duration for QoS refresh includes an index corresponding to the minimum duration for QoS refresh, and different minimum durations that are for QoS refresh and that correspond to different indexes. A correspondence between the different indexes and the different minimum durations for QoS refresh may be defined in a protocol, or may be negotiated by the terminal and the RAN node. This is not limited.

In another possible implementation, the terminal may explicitly report the minimum duration for QoS refresh. For example, the information indicating the minimum duration for QoS refresh includes a value of the minimum duration for QoS refresh.

In a possible implementation, the terminal may report, through terminal capability information, the minimum duration for QoS refresh; and correspondingly, the RAN node obtains, based on the terminal capability information, the minimum duration for QoS refresh. Certainly, the terminal may alternatively report, based on other uplink information, the minimum duration for QoS refresh, for example, report, based on UAI or UCI, the minimum duration for QoS refresh.

In a possible implementation, the terminal may actively report the minimum duration for QoS refresh. For example, after establishing an RRC connection to the RAN node, the terminal may actively report, based on the terminal capability information, the minimum duration for QoS refresh.

In another possible implementation, the terminal may report, based on configuration of the RAN node, the minimum duration for QoS refresh. In this scenario, as shown in FIG. 6, before step S501, the method further includes step S500 below. Correspondingly, step S501 may be replaced with S501'.

S500: The RAN node sends configuration information to the terminal; and correspondingly, the terminal receives the configuration information from the RAN node.

The configuration information indicates reporting of the minimum duration for QoS refresh. Alternatively, it may be understood that the configuration information indicates that reporting of the minimum duration for QoS refresh is allowed, or the configuration information indicates that the terminal needs to report the minimum duration for QoS refresh.

Certainly, the RAN node may alternatively send the configuration information to the terminal, to indicate that reporting of the minimum duration for QoS refresh is not allowed, or indicate that the terminal does not need to report the minimum duration for QoS refresh. This application is described by using an example in which the RAN node indicates reporting of the minimum duration for QoS refresh.

S501': The terminal reports, based on the configuration information, the minimum duration for QoS refresh.

For example, the configuration information may be carried in an RRC message, for example, carried in an RRC reconfiguration (RRCReconfiguration) message. Further, the configuration information may be carried in an other configuration (OtherConfig) information element of the RRC reconfiguration message.

S502: The RAN node sends first information to the terminal; and correspondingly, the terminal receives the first information from the RAN node. The first information indicates a first QoS.

In a possible implementation, before step S502, the terminal may report at least one candidate QoS to the RAN node. In this scenario, the first QoS may be a QoS in the at least one candidate QoS. For the at least one candidate QoS, refer to the related descriptions in step S301. Details are not described herein again.

In another possible implementation, before step S502, the terminal may not report a candidate QoS to the RAN node. In this scenario, the first QoS may be determined by the RAN node based on at least one of a service requirement, a channel state, a resource allocation condition, or a historical transmission state.

S503: The terminal and the RAN node perform data transmission based on the first QoS in the minimum duration for QoS refresh.

Data transmission may include uplink data transmission and/or downlink data transmission. For details, refer to the related descriptions in step S303. Details are not described herein again.

In a possible implementation, start time of the minimum duration for QoS refresh is obtained based on receiving time (or sending time) of the first information. For example, the start time of the minimum duration for QoS refresh is equal to the receiving time (or the sending time) of the first information, or the start time of the minimum duration for QoS refresh is time obtained by offsetting the receiving time (or the sending time) of the first information by a period of time.

In another possible implementation, start time of the minimum duration for QoS refresh is obtained based on receiving time (or sending information) of the first information and a hysteresis duration for QoS activation. For example, the start time of the minimum duration for QoS refresh is equal to t+T. t represents the receiving time (or the sending time) of the first information, and T represents the hysteresis duration for QoS activation. For the hysteresis duration for QoS activation, refer to the related descriptions in step S303. Details are not described herein again.

For example, in the foregoing two implementations, for the terminal, the start time of the minimum duration for QoS refresh is determined based on the receiving time of the first information; and for the RAN node, the minimum duration for QoS refresh is determined based on the sending time of the first information.

Optionally, before step S503, the terminal may report the hysteresis duration for QoS activation, so that the RAN node determines the start time of the minimum duration for QoS refresh. For example, the hysteresis duration for QoS activation and the minimum duration for QoS refresh may be reported in one message, or may be separately reported in different messages. This is not specifically limited in this application.

In a possible implementation, the terminal and the RAN node may perform data transmission based on the first QoS in a part or all of the minimum duration for QoS refresh. In addition, in the minimum duration for QoS refresh, the terminal and the RAN node do not perform data transmission based on a QoS other than the first QoS. In other words, in the minimum duration for QoS refresh, the QoS for data transmission performed by the terminal and the RAN node remains unchanged.

In a possible implementation, if data transmission still needs to be performed after the minimum duration for QoS refresh, the terminal and the RAN node may continue to perform data transmission based on the first QoS, or perform data transmission based on a second QoS. The second QoS is a QoS indicated by the RAN node based on second information. To be specific, the RAN node further sends the second information to the terminal; and correspondingly, the terminal receives the second information from the RAN node, where the second information indicates the second QoS.

Optionally, if end time of the minimum duration for QoS refresh is in activation time of the first QoS, the terminal and the RAN may continue to perform data transmission based on the first QoS in remaining activation time of the first QoS; otherwise, the terminal and the RAN node may perform data transmission based on the second QoS.

Optionally, the second information may be sent by the RAN node in the minimum duration for QoS refresh, or may be sent by the RAN node outside the minimum duration for QoS refresh. This is not specifically limited in this application.

Optionally, when the RAN node sends the second information in the minimum duration for QoS refresh, start time when the terminal and the RAN node perform data transmission based on the second QoS may be end time of the minimum duration for QoS refresh. When the RAN node sends the second information after the minimum duration for QoS refresh, start time when the terminal and the RAN node perform data transmission based on the second QoS may be receiving time (or sending time) of the second information, or may be determined based on receiving time (or sending time) of the second information and the hysteresis duration for QoS activation.

Based on the foregoing solution, the terminal may report the minimum duration for QoS refresh; and after the RAN node configures a QoS, the terminal and the RAN node perform data transmission based on the QoS in the minimum duration for QoS refresh. That is, in the minimum duration for QoS refresh, the terminal and the RAN node perform data transmission based on a QoS. In other words, in the minimum duration for QoS refresh, the QoS for data transmission performed by the terminal and the RAN node remains unchanged, to avoid a case in which the terminal cannot adjust the QoS in a timely manner due to frequent QoS changes, thereby reducing service stalling. In addition, the minimum duration for QoS refresh is reported by the terminal. Therefore, the terminal may flexibly adjust the minimum duration for QoS refresh with reference to the coding capability of the terminal and the like, so that the coding capability of the terminal can support frequent QoS adjustment, to accommodate service flexibility as much as possible, thereby improving service performance and user experience.

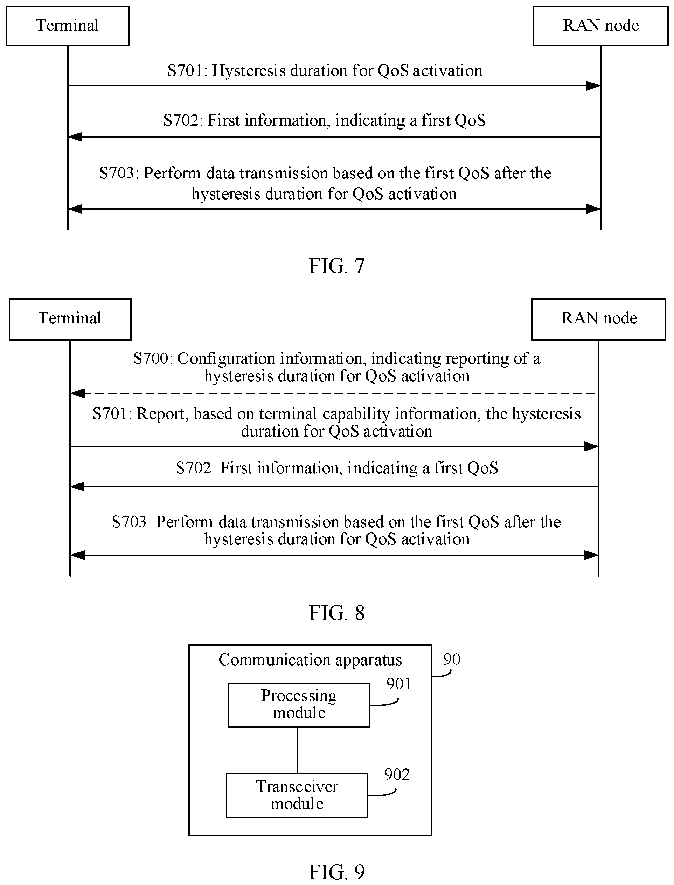

In addition, this application further provides a quality of service-based data transmission method. As shown in FIG. 7, the quality of service-based data transmission method may include the following steps.

S701: A terminal reports a hysteresis duration for QoS activation; and correspondingly, a RAN node obtains the hysteresis duration for QoS activation.

In a possible implementation, step S701 may be implemented as follows: The terminal sends, to the RAN node, information indicating the hysteresis duration for QoS activation, and the RAN node receives the information indicating the hysteresis duration for QoS activation from the terminal.

In a possible implementation, the hysteresis duration for QoS activation may be understood as a processing delay from time when the terminal receives information indicating a QoS or configuration information of a QoS to time when the terminal can perform data transmission based on the QoS.

Optionally, the hysteresis duration for QoS activation may also be referred to as a delay for QoS activation, a delay for QoS configuration activation, a hysteresis duration for QoS configuration activation, an activation delay for QoS adjustment, an activation delay for QoS refresh, a hysteresis duration for QoS adjustment, a hysteresis duration for QoS refresh, or the like, and may be replaced with each other. This is not specifically limited in this application.

In a possible implementation, the terminal may implicitly report the hysteresis duration for QoS activation. For example, the information indicating the hysteresis duration for QoS activation includes an index corresponding to the hysteresis duration for QoS activation and different hysteresis durations that are for QoS activation and that correspond to different indexes. A correspondence between the different indexes and the different hysteresis durations for QoS activation may be defined in a protocol, or may be negotiated by the terminal and the RAN node. This is not limited.

In another possible implementation, the terminal may explicitly report the hysteresis duration for QoS activation. For example, the information indicating the hysteresis duration for QoS activation includes a value of a minimum duration of a QoS.

In a possible implementation, the terminal may report, through terminal capability information, the hysteresis duration for QoS activation; and correspondingly, the RAN node obtains, based on the terminal capability information, the hysteresis duration for QoS activation. Certainly, the terminal may alternatively report, based on other uplink information, the hysteresis duration for QoS activation, for example, report, based on UAI or UCI, the hysteresis duration for QoS activation.

In a possible implementation, the terminal may actively report the hysteresis duration for QoS activation. For example, after establishing an RRC connection to the RAN node, the terminal may actively report, based on the terminal capability information, the hysteresis duration for QoS activation.

In another possible implementation, the terminal may report, based on configuration of the RAN node, the hysteresis duration for QoS activation. In this scenario, as shown in FIG. 8, before step S701, the method further includes step S700 below. Correspondingly, step S701 may be replaced with S701'.

S700: The RAN node sends configuration information to the terminal; and correspondingly, the terminal receives the configuration information from the RAN node.

The configuration information indicates reporting of the hysteresis duration for QoS activation. Alternatively, it may be understood that the configuration information indicates that reporting of the hysteresis duration for QoS activation is allowed, or the configuration information indicates that the terminal needs to report the hysteresis duration for QoS activation.

Certainly, the RAN node may alternatively send the configuration information to the terminal, to indicate that reporting of the hysteresis duration for QoS activation is not allowed, or indicate that the terminal does not need to report the hysteresis duration for QoS activation. This application is described by using an example in which the RAN node indicates reporting of the hysteresis duration for QoS activation.

S701': The terminal reports, based on the configuration information, the hysteresis duration for QoS activation.

For example, the configuration information may be carried in an RRC message, for example, carried in an RRC reconfiguration (RRCReconfiguration) message. Further, the configuration information may be carried in another configuration (OtherConfig) information element of the RRC reconfiguration message.

S702: The RAN node sends first information to the terminal; and correspondingly, the terminal receives the first information from the RAN node. The first information indicates a first QoS.

In a possible implementation, before step S702, the terminal may report at least one candidate QoS to the RAN node. In this scenario, the first QoS may be a QoS in the at least one candidate QoS. For the at least one candidate QoS, refer to the related descriptions in step S301. Details are not described herein again.

In another possible implementation, before step S702, the terminal may not report a candidate QoS to the RAN node. In this scenario, the first QoS may be determined by the RAN node based on at least one of a service requirement, a channel state, a resource allocation condition, or a historical transmission state.

S703: The terminal and the RAN node perform data transmission based on the first QoS after the hysteresis duration for QoS activation.

Data transmission may include uplink data transmission and/or downlink data transmission. For details, refer to the related descriptions in step S303. Details are not described herein again.

In a possible implementation, start time of the hysteresis duration for QoS activation is obtained based on receiving time (or sending time) of the first information. For example, the start time of the hysteresis duration for QoS activation is equal to the receiving time (or the sending time) of the first information, or the start time of the hysteresis duration for QoS activation is time obtained by offsetting the receiving time (or the sending time) of the first information by a period of time.

For example, for the terminal, the start time of the hysteresis duration for QoS activation is determined based on the receiving time of the first information; and for the RAN node, the hysteresis duration for QoS activation is determined based on the sending time of the first information.

In a possible implementation, after the hysteresis duration for QoS activation, the terminal and the RAN node perform data transmission based on the first QoS in an activation duration of the first QoS. For details, refer to the related descriptions in step S303. Details are not described herein again.

Optionally, before step S703, the terminal may report an activation duration of the candidate QoS to the RAN node. For details, refer to the related descriptions in step S301. Details are not described herein again.

In a possible implementation, after the hysteresis duration for QoS activation, the terminal and the RAN node may perform data transmission based on the first QoS in a part or all of the activation duration of the first QoS. For details, refer to the related descriptions in the method corresponding to FIG. 3 and FIG. 4. Details are not described herein again.

Based on the foregoing solution, the terminal may report the hysteresis duration for QoS activation; and after the RAN node configures the first QoS, the terminal and the RAN node perform data transmission based on the first QoS after the hysteresis duration for QoS activation. That is, after receiving QoS configuration, the terminal performs data transmission after the hysteresis duration. During the hysteresis duration, the terminal may perform related processing to prepare for subsequent data transmission, so that the terminal can quickly support data transmission based on the first QoS after the hysteresis duration, thereby reducing service stalling and improving service performance and user experience.

The foregoing describes the methods provided in this application. In addition, this application further provides a communication apparatus configured to implement functions described in the foregoing method embodiments.

It may be understood that, to implement the foregoing functions, the communication apparatus includes a corresponding hardware structure and/or software module for performing each function. A person skilled in the art should be easily aware that, in combination with units and algorithm steps of the examples described in embodiments disclosed in this specification, this application can be implemented by hardware or a combination of hardware and computer software. Whether a function is performed by hardware or hardware driven by computer software depends on particular applications and design constraints of the technical solutions. A person skilled in the art may use different methods to implement the described functions for each particular application, but it should not be considered that the implementation goes beyond the scope of this application.

In embodiments of this application, the communication apparatus may be divided into functional modules based on the foregoing method embodiments. For example, each functional module may be obtained through division based on each corresponding function, or two or more functions may be integrated into one processing module. The integrated module may be implemented in a form of hardware, or may be implemented in a form of a software functional module. It should be noted that, in embodiments of this application, module division is an example, and is merely logical function division. In an actual implementation, there may be another division manner.

FIG. 9 of a communication apparatus is a diagram of a structure of a communication apparatus 90. The communication apparatus 90 includes a processing module 901 and a transceiver module 902. The communication apparatus 90 may be configured to implement a function of the terminal or the RAN node.

In some embodiments, the communication apparatus 90 may further include a storage module (not shown in FIG. 9), configured to store program instructions and data.

In some embodiments, the transceiver module 902 may also be referred to as a transceiver unit, and is configured to implement a sending function and/or a receiving function. The transceiver module 902 may include a transceiver circuit, a transceiver machine, a transceiver, or a communication interface.

In some embodiments, the transceiver module 902 may include a receiving module and a sending module, respectively configured to perform a receiving step and a sending step performed by the terminal or the RAN node in the foregoing method embodiments, and/or configured to support other processes of technologies described in this specification; and the processing module 901 may be configured to perform a processing step performed by the terminal or the RAN node in the foregoing method embodiments, and/or configured to support other processes of the technologies described in this specification.

When the communication apparatus 90 is configured to implement a function of the terminal, in a possible implementation:

The processing module 901 is configured to control the communication apparatus 90 to report at least one candidate QoS and an activation duration of the candidate QoS, where the at least one candidate QoS includes a first QoS, and the activation duration of the candidate QoS includes an activation duration of the first QoS; the transceiver module 902 is configured to receive first information, where the first information indicates the first QoS; and the processing module 901 is further configured to control the communication apparatus 90 to perform data transmission based on the first QoS in the activation duration of the first QoS.

Optionally, start time of the activation duration of the first QoS is obtained based on receiving time of the first information; or start time of the activation duration of the first QoS is obtained based on receiving time of the first information and a hysteresis duration for QoS activation.

Optionally, that the processing module 901 is configured to control the communication apparatus 90 to report the at least one candidate QoS includes: The processing module 901 is configured to control the communication apparatus 90 to report the at least one candidate QoS through terminal capability information.

Optionally, that the processing module 901 is configured to control the communication apparatus 90 to report the activation duration of the candidate QoS includes: The processing module 901 is configured to control the communication apparatus 90 to report the activation duration of the candidate QoS based on UAI.

Optionally, the transceiver module 902 is further configured to receive configuration information; and that the processing module 901 is configured to control the communication apparatus 90 to report the at least one candidate QoS and the activation duration of the candidate QoS includes: The processing module 901 is configured to control the communication apparatus 90 to report the at least one candidate QoS and the activation duration of the candidate QoS based on the configuration information.

When the communication apparatus 90 is configured to implement a function of the terminal, in another possible implementation:
The processing module 901 is configured to control the communication apparatus 90 to report a minimum duration for QoS refresh; the transceiver module 902 is configured to receive first information, where the first information indicates a first QoS; and the processing module 901 is further configured to control the communication apparatus 90 to perform data transmission based on the first QoS in the minimum duration for QoS refresh.

Optionally, the transceiver module 902 is further configured to receive second information, where the second information indicates a second QoS; and the processing module 901 is further configured to control the communication apparatus 90 to perform data transmission based on the second QoS after the minimum duration for QoS refresh.

Optionally, start time of the minimum duration for QoS refresh is obtained based on receiving time of the first information; or start time of the minimum duration for QoS refresh is obtained based on receiving time of the first information and a hysteresis duration for QoS activation.

Optionally, that the processing module 901 is configured to control the communication apparatus 90 to report the minimum duration for QoS refresh includes: The processing module 901 is configured to control the communication apparatus 90 to report, through terminal capability information, the minimum duration for QoS refresh.

Optionally, the transceiver module 902 is further configured to receive configuration information; and that the processing module 901 is configured to control the communication apparatus 90 to report the minimum duration for QoS refresh includes: The processing module 901 is configured to control the communication apparatus 90 to report, based on the configuration information, the minimum duration for QoS refresh.

When the communication apparatus 90 is configured to implement a function of the terminal, in still another possible implementation:

The processing module 901 is configured to control the communication apparatus 90 to report a hysteresis duration for QoS activation; the transceiver module 902 is configured to receive first information, where the first information indicates a first QoS; and the processing module 901 is further configured to control the communication apparatus 90 to perform data transmission based on the first QoS after the hysteresis duration for QoS activation.

Optionally, start time of the hysteresis duration for QoS activation is obtained based on receiving time of the first information.

Optionally, that the processing module 901 is configured to control the communication apparatus 90 to report the hysteresis duration for QoS activation includes: The processing module 901 is configured to control the communication apparatus 90 to report, through terminal capability information, the hysteresis duration for QoS activation.

Optionally, the transceiver module 902 is further configured to receive configuration information; and that the processing module 901 is configured to control the communication apparatus 90 to report the hysteresis duration for QoS activation includes: The processing module 901 is configured to control the communication apparatus 90 to report, based on the configuration information, the hysteresis duration for QoS activation.

When the communication apparatus 90 is configured to implement a function of the RAN node, in a possible implementation:
The processing module 901 is configured to obtain at least one candidate QoS and an activation duration of the candidate QoS, where the at least one candidate QoS includes a first QoS, and the activation duration of the candidate QoS includes an activation duration of the first QoS; the transceiver module 902 is configured to send first information, where the first information indicates the first QoS; and the processing module 901 is further configured to control the communication apparatus 90 to perform data transmission based on the first QoS in the activation duration of the first QoS.

Optionally, start time of the activation duration of the first QoS is obtained based on sending time of the first information; or start time of the activation duration of the first QoS is obtained based on sending time of the first information and a hysteresis duration for QoS activation.

Optionally, that the processing module 901 is configured to obtain the at least one candidate QoS includes: The processing module 901 is configured to obtain the at least one candidate QoS through terminal capability information.

Optionally, that the processing module 901 is configured to obtain the activation duration of the candidate QoS includes: The processing module 901 is configured to obtain the activation duration of the candidate QoS based on user equipment assistance information UAI.

Optionally, the transceiver module 902 is further configured to send configuration information, where the configuration information indicates reporting of the at least one candidate QoS and the activation duration of the candidate QoS.

When the communication apparatus 90 is configured to implement a function of the RAN node, in another possible implementation:
The processing module 901 is configured to obtain a minimum duration for QoS refresh; the transceiver module 902 is configured to send first information, where the first information indicates a first QoS; and the processing module 901 is further configured to control the communication apparatus 90 to perform data transmission based on the first QoS in the minimum duration for QoS refresh.

Optionally, the transceiver module 902 is further configured to send second information, where the second information indicates a second QoS; and the processing module 901 is further configured to perform data transmission based on the second QoS after the minimum duration for QoS refresh.

Optionally, start time of the minimum duration for QoS refresh is obtained based on sending time of the first information; or start time of the minimum duration for QoS refresh is obtained based on sending time of the first information and a hysteresis duration for QoS activation.

Optionally, that the processing module 901 is configured to obtain the minimum duration for QoS refresh includes: The processing module 901 is configured to obtain, through terminal capability information, the minimum duration for QoS refresh.

Optionally, the transceiver module 902 is further configured to send configuration information, where the configuration information indicates reporting of the minimum duration for QoS refresh.

When the communication apparatus 90 is configured to implement a function of the RAN node, in still another possible implementation:
The processing module 901 is configured to obtain a hysteresis duration for QoS activation; the transceiver module 902 is further configured to send first information, where the first information indicates a first QoS; and the processing module 901 is further configured to control the communication apparatus 90 to perform data transmission based on the first QoS after the hysteresis duration for QoS activation.

Optionally, start time of the hysteresis duration for QoS activation is obtained based on sending time of the first information.

Optionally, that the processing module 901 is configured to obtain the hysteresis duration for QoS activation includes: The processing module 901 is configured to obtain, through terminal capability information, the hysteresis duration for QoS activation.

Optionally, the transceiver module 902 is further configured to send configuration information, where the configuration information indicates the hysteresis duration for QoS activation.

All related content of the steps in the foregoing method embodiments may be cited in function descriptions of the corresponding functional modules. Details are not described herein again.

In this application, the communication apparatus 90 may be presented in a form of functional modules obtained through division in an integrated manner. The "module" herein may be an application-specific integrated circuit (application-specific integrated circuit, ASIC), a circuit, a processor that executes one or more software or firmware programs, a memory, an integrated logic circuit, and/or another device that can provide the foregoing functions.

In some embodiments, when the communication apparatus 90 in FIG. 9 is a chip or a chip system, a function/an implementation process of the transceiver module 902 may be implemented by an input/output interface (or a communication interface) of the chip or the chip system, and a function/an implementation process of the processing module 901 may be implemented by a processor (or a processing circuit) of the chip or the chip system.

The communication apparatus 90 provided in this embodiment may perform the foregoing methods. Therefore, for technical effects that can be achieved by the communication apparatus, refer to the foregoing method embodiments. Details are not described herein again.

In a possible product form, the terminal or the RAN node in embodiments of this application may be implemented by using the following: one or more field-programmable gate arrays (field-programmable gate arrays, FPGAs), a programmable logic device (programmable logic device, PLD), a controller, a state machine, gate logic, a discrete hardware component, any other suitable circuit, or any combination of circuits that can perform various functions described throughout this application.

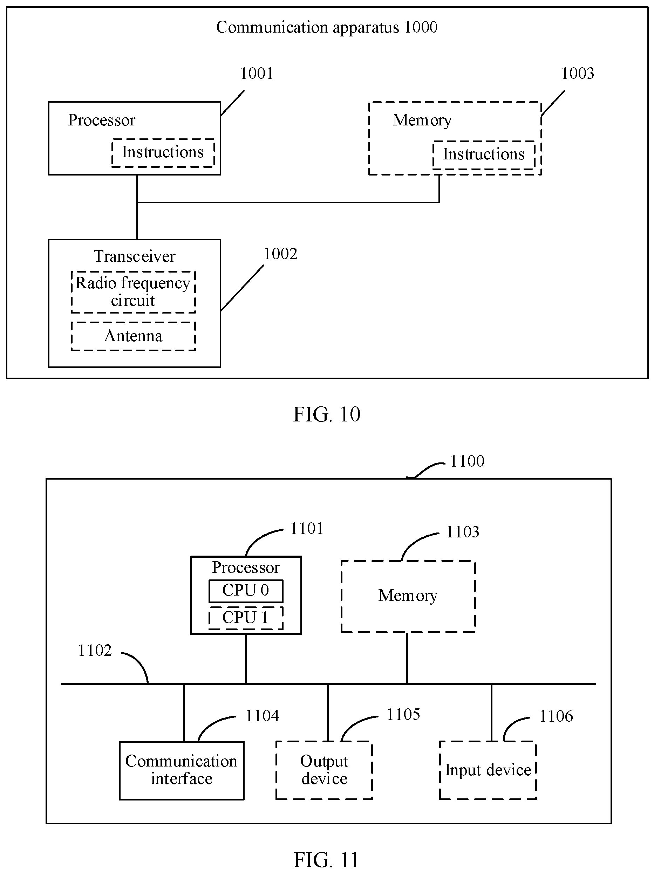

In another possible product form, the terminal or the RAN node in embodiments of this application may be implemented by using a general bus architecture. For ease of description, FIG. 10 is a diagram of a structure of a communication apparatus 1000 according to an embodiment of this application. The communication apparatus 1000 includes a processor 1001 and a transceiver 1002. The communication apparatus 1000 may be a terminal, or a chip or a chip system in the terminal; or the communication apparatus 1000 may be a RAN node, or a chip or a module in the RAN node. FIG. 10 shows only main components of the communication apparatus 1000. In addition to the processor 1001 and the transceiver 1002, the communication apparatus may further include a memory 1003 and an input/output apparatus (not shown in the figure).

Optionally, the processor 1001 is mainly configured to: process a communication protocol and communication data, control the entire communication apparatus, execute a software program, and process data of the software program, to implement the methods provided in the foregoing method embodiments. The memory 1003 is mainly configured to store the software program and the data. The transceiver 1002 may include a radio frequency circuit and an antenna. The radio frequency circuit is mainly configured to: perform conversion between a baseband signal and a radio frequency signal, and process a radio frequency signal. The antenna is mainly configured to receive and send a radio frequency signal in a form of an electromagnetic wave. The input/output apparatus such as a touchscreen, a display, or a keyboard is mainly configured to: receive data input by a user and output data to the user.

Optionally, the processor 1001, the transceiver 1002, and the memory 1003 may be connected through a communication bus.

After the communication apparatus is powered on, the processor 1001 may read the software program in the memory 1003, interpret and execute instructions of the software program, and process the data of the software program. When data needs to be sent in a wireless manner, the processor 1001 performs baseband processing on the to-be-sent data, and outputs a baseband signal to the radio frequency circuit. The radio frequency circuit performs radio frequency processing on the baseband signal, and then sends a radio frequency signal to the outside through the antenna in a form of an electromagnetic wave. When data is sent to the communication apparatus, the radio frequency circuit receives a radio frequency signal through the antenna, converts the radio frequency signal into a baseband signal, and outputs the baseband signal to the processor 1001. The processor 1001 converts the baseband signal into data, and processes the data.

In another implementation, the radio frequency circuit and the antenna may be disposed independent of the processor that performs baseband processing. For example, in a distributed scenario, the radio frequency circuit and the antenna may be remotely disposed independent of the communication apparatus.

In some embodiments, in hardware implementation, a person skilled in the art may figure out that the communication apparatus 90 may be in a form of the communication apparatus 1000 shown in FIG. 10.

In an example, a function/an implementation process of the processing module 901 in FIG. 9 may be implemented by the processor 1001 in the communication apparatus 1000 shown in FIG. 10 by invoking computer-executable instructions stored in the memory 1003. A function/An implementation process of the transceiver module 902 in FIG. 9 may be implemented by the transceiver 1002 in the communication apparatus 1000 shown in FIG. 10.

In another possible product form, the terminal or the RAN node in this application may use a composition structure shown in FIG. 11, or include components shown in FIG. 11. FIG. 11 is a composition diagram of a communication apparatus 1100 according to this application. The communication apparatus 1100 may be a terminal, or a chip or a system on chip in a terminal; or may be a RAN node, or a module, a chip, or a system on chip in a RAN node.

As shown in FIG. 11, the communication apparatus 1100 includes at least one processor 1101 and at least one communication interface (in FIG. 11, only an example in which one communication interface 1104 and one processor 1101 are included is used for description). Optionally, the communication apparatus 1100 may further include a communication bus 1102 and a memory 1103.

The processor 1101 may be a general-purpose central processing unit (central processing unit, CPU), a general-purpose processor, a network processor (network processor, NP), a digital signal processor (digital signal processor, DSP), a microprocessor, a microcontroller, a PLD, or any combination thereof. Alternatively, the processor 1101 may be another apparatus having a processing function, for example, a circuit, a device, or a software module. This is not limited.

The communication bus 1102 is configured to connect different components in the communication apparatus 1100, so that the different components can communicate with each other. The communication bus 1102 may be a peripheral component interconnect (peripheral component interconnect, PCI) bus or an extended industry standard architecture (extended industry standard architecture, EISA) bus, or the like. The bus may be classified into an address bus, a data bus, a control bus, and the like. For ease of representation, only one bold line is used to represent the bus in FIG. 11, but this does not mean that there is only one bus or only one type of bus.

The communication interface 1104 is configured to communicate with another device or a communication network. For example, the communication interface 1104 may be a module, a circuit, a transceiver, or any apparatus that can implement communication. Optionally, the communication interface 1104 may alternatively be an input/output interface located in the processor 1101, and is configured to implement signal input and signal output of the processor.

The memory 1103 may be an apparatus having a storage function, and is configured to store instructions and/or data. The instructions may be a computer program.

For example, the memory 1103 may be a read-only memory (read-only memory, ROM) or another type of static storage device that can store static information and/or instructions; may be a random access memory (random access memory, RAM) or another type of dynamic storage device that can store information and/or instructions; or may be an electrically erasable programmable read-only memory (electrically erasable programmable read-only memory, EEPROM), a compact disc read-only memory (compact disc read-only memory, CD-ROM) or another compact disc storage, an optical disc storage (including a compact disc, a laser disc, an optical disc, a digital versatile disc, a Blu-ray disc, or the like), a magnetic disk storage medium or another magnetic storage device, or the like. This is not limited.

It should be noted that the memory 1103 may exist independently of the processor 1101, or may be integrated with the processor 1101. The memory 1103 may be located inside the communication apparatus 1100, or may be located outside the communication apparatus 1100. This is not limited. The processor 1101 may be configured to execute the instructions stored in the memory 1103, to implement the methods provided in the foregoing embodiments of this application.

In an optional implementation, the communication apparatus 1100 may further include an output device 1105 and an input device 1106. The output device 1105 communicates with the processor 1101, and may display information in a plurality of manners. For example, the output device 1105 may be a liquid crystal display (liquid crystal display, LCD), a light-emitting diode (light-emitting diode, LED) display device, a cathode ray tube (cathode ray tube, CRT) display device, or a projector (projector). The input device 1106 communicates with the processor 1101, and may receive a user input in a plurality of manners. For example, the input device 1106 may be a mouse, a keyboard, a touchscreen device, or a sensing device.

In some embodiments, in hardware implementation, a person skilled in the art may figure out that the communication apparatus 90 shown in FIG. 9 may be in a form of the communication apparatus 1100 shown in FIG. 11.

In an example, a function/an implementation process of the processing module 901 in FIG. 9 may be implemented by the processor 1101 in the communication apparatus 1100 shown in FIG. 11 by invoking computer-executable instructions stored in the memory 1103. A function/An implementation process of the transceiver module 902 in FIG. 9 may be implemented by the communication interface 1104 in the communication apparatus 1100 shown in FIG. 11.

It should be noted that the structure shown in FIG. 11 does not constitute a specific limitation on the terminal or the RAN node. For example, in some other embodiments of this application, the terminal or the RAN node may include more or fewer components than those shown in the figure, some components may be combined, some components may be split, or different component arrangements may be used. The components shown in the figure may be implemented by hardware, software, or a combination of software and hardware.

In some embodiments, an embodiment of this application further provides a communication apparatus. The communication apparatus includes a processor, configured to implement the method in any one of the foregoing method embodiments.

In a possible implementation, the communication apparatus further includes a memory. The memory is configured to store a necessary computer program and data. The computer program may include instructions. The processor may invoke the instructions in the computer program stored in the memory, to instruct the communication apparatus to perform the method in any foregoing method embodiment. Certainly, the communication apparatus may not include a memory.

In another possible implementation, the communication apparatus further includes an interface circuit. The interface circuit is a code/data read/write interface circuit, and the interface circuit is configured to: receive computer-executable instructions (where the computer-executable instructions are stored in the memory, and may be directly read from the memory, or may be read via another device) and transmit the computer-executable instructions to the processor.

In still another possible implementation, the communication apparatus further includes a communication interface, and the communication interface is configured to communicate with a module other than the communication apparatus.

It may be understood that the communication apparatus may be a chip or a chip system. When the communication apparatus is a chip system, the communication apparatus may include a chip, or may include a chip and another discrete device. This is not specifically limited in embodiments of this application.

This application further provides a computer-readable storage medium. The computer-readable storage medium stores a computer program or instructions. When the computer program or the instructions are executed by a computer, functions in any one of the foregoing method embodiments are implemented.

This application further provides a computer program product. When the computer program product is executed by a computer, functions in any one of the foregoing method embodiments are implemented.

A person of ordinary skill in the art may understand that, for the purpose of convenient and brief description, for a detailed working process of the foregoing system, apparatus, and unit, refer to a corresponding process in the foregoing method embodiments. Details are not described herein again.

It may be understood that the system, apparatus, and method described in this application may alternatively be implemented in another manner. For example, the described apparatus embodiments are merely examples. For example, unit division is merely logical function division and may be other division. In an actual implementation, there may be another division manner. For example, a plurality of units or components may be combined or integrated into another system, or some features may be ignored or not performed. In addition, the displayed or discussed mutual couplings or direct couplings or communication connections may be implemented through some interfaces. The indirect couplings or communication connections between the apparatuses or units may be implemented in electronic, mechanical, or other forms.

The units described as separate parts may be physically separated or not, this is, may be located together in the same place or distributed on a plurality of network units. Parts displayed as units may be or may be not physical units. A part or all of the units may be selected based on actual requirements to achieve the objectives of the solutions of embodiments.

In addition, functional units in embodiments of this application may be integrated into one processing unit, or each of the units may exist alone physically, or two or more units may be integrated into one unit.

All or a part of the foregoing embodiments may be implemented by using software, hardware, firmware, or any combination thereof. When a software program is used to implement embodiments, embodiments may be implemented completely or partially in a form of a computer program product. The computer program product includes one or more computer instructions. When the computer program instructions are loaded and executed on a computer, the procedures or functions according to embodiments of this application are all or partially generated. The computer may be a general-purpose computer, a dedicated computer, a computer network, or another programmable apparatus. The computer instructions may be stored in a computer-readable storage medium or may be transmitted from a computer-readable storage medium to another computer-readable storage medium. For example, the computer instructions may be transmitted from a website, computer, server, or data center to another website, computer, server, or data center in a wired (for example, a coaxial cable, an optical fiber, or a digital subscriber line (digital subscriber line, DSL)) or wireless (for example, infrared, radio, or microwave) manner. The computer-readable storage medium may be any usable medium accessible by a computer, or a data storage device, such as a server or a data center, integrating one or more usable media. The usable medium may be a magnetic medium (for example, a floppy disk, a hard disk, or a magnetic tape), an optical medium (for example, a DVD), a semiconductor medium (for example, a solid-state drive (solid-state drive, SSD)), or the like. In embodiments of this application, the computer may include the foregoing apparatus.

Although this application is described with reference to embodiments, in a process of implementing this application that claims protection, a person skilled in the art may understand and implement another variation of the disclosed embodiments by viewing the accompanying drawings, disclosed content, and appended claims. In the claims, "comprising" (comprising) does not exclude another component or another step, and "a" or "one" does not exclude a case of plurality. A single processor or another unit may implement several functions enumerated in the claims. Some measures are recorded in dependent claims that are different from each other, but this does not mean that these measures cannot be combined to produce a better effect.

Although this application is described with reference to specific features and embodiments thereof, it is clear that various modifications and combinations may be made to them without departing from the protection scope of this application. Correspondingly, the specification and accompanying drawings are merely example descriptions of this application defined by the appended claims, and are considered as any of or all modifications, variations, combinations or equivalents that cover the scope of this application. It is clear that a person skilled in the art can make various modifications and variations to this application without departing from the scope of this application. In this way, this application is intended to cover these modifications and variations of this application provided that they fall within the scope of the claims of this application and their equivalent technologies.

## Claims

1. A communication method, wherein the method comprises:
reporting at least one candidate quality of service QoS and an activation duration of the candidate QoS, wherein the at least one candidate QoS comprises a first QoS, and the activation duration of the candidate QoS comprises an activation duration of the first QoS;
receiving first information, wherein the first information indicates the first QoS; and
performing data transmission based on the first QoS in the activation duration of the first QoS.

2. The method according to claim 1, wherein start time of the activation duration of the first QoS is obtained based on receiving time of the first information; or
start time of the activation duration of the first QoS is obtained based on receiving time of the first information and a hysteresis duration for QoS activation.

3. The method according to claim 1 or 2, wherein the reporting the at least one candidate QoS comprises: reporting the at least one candidate QoS through terminal capability information.

4. The method according to any one of claims 1 to 3, wherein the reporting the activation duration of the candidate QoS comprises: reporting the activation duration of the candidate QoS based on user equipment assistance information UAI.

5. The method according to any one of claims 1 to 4, wherein the reporting the at least one candidate QoS and the activation duration of the candidate QoS comprises:
receiving configuration information; and
reporting the at least one candidate QoS and the activation duration of the candidate QoS based on the configuration information.

6. A communication method, wherein the method comprises:
reporting a minimum duration for quality of service QoS refresh;
receiving first information, wherein the first information indicates a first QoS; and
performing data transmission based on the first QoS in the minimum duration for QoS refresh.

7. The method according to claim 6, wherein the method further comprises:
receiving second information, wherein the second information indicates a second QoS; and
performing data transmission based on the second QoS after the minimum duration for QoS refresh.

8. The method according to claim 6 or 7, wherein start time of the minimum duration for QoS refresh is obtained based on receiving time of the first information; or
start time of the minimum duration for QoS refresh is obtained based on receiving time of the first information and a hysteresis duration for QoS activation.

9. The method according to any one of claims 6 to 8, wherein the reporting the minimum duration for QoS refresh comprises: reporting, through terminal capability information, the minimum duration for QoS refresh.

10. The method according to any one of claims 6 to 9, wherein the reporting the minimum duration for QoS refresh comprises:
receiving configuration information; and
reporting, based on the configuration information, the minimum duration for QoS refresh.

11. A communication method, wherein the method comprises:
reporting a hysteresis duration for quality of service QoS activation;
receiving first information, wherein the first information indicates a first QoS; and
performing data transmission based on the first QoS after the hysteresis duration for QoS activation.

12. The method according to claim 11, wherein start time of the hysteresis duration for QoS activation is obtained based on receiving time of the first information.

13. The method according to claim 11 or 12, wherein the reporting the hysteresis duration for QoS activation comprises: reporting, through terminal capability information, the hysteresis duration for QoS activation.

14. The method according to any one of claims 11 to 13, wherein the reporting the hysteresis duration for QoS activation comprises:
receiving configuration information; and
reporting, based on the configuration information, the hysteresis duration for QoS activation.

15. A communication apparatus, wherein the communication apparatus comprises a transceiver module and a processing module, wherein
the processing module is configured to control the apparatus to report at least one candidate quality of service QoS and an activation duration of the candidate QoS, wherein the at least one candidate QoS comprises a first QoS, and the activation duration of the candidate QoS comprises an activation duration of the first QoS;
the transceiver module is configured to receive first information, wherein the first information indicates the first QoS; and
the processing module is further configured to control the apparatus to perform data transmission based on the first QoS in the activation duration of the first QoS.

16. The apparatus according to claim 15, wherein start time of the activation duration of the first QoS is obtained based on receiving time of the first information; or
start time of the activation duration of the first QoS is obtained based on receiving time of the first information and a hysteresis duration for QoS activation.

17. The apparatus according to claim 15 or 16, wherein that the processing module is configured to control the apparatus to report the at least one candidate QoS comprises: the processing module is configured to control the apparatus to report the at least one candidate QoS through terminal capability information.

18. The apparatus according to any one of claims 15 to 17, wherein that the processing module is configured to control the apparatus to report the activation duration of the candidate QoS comprises: the processing module is configured to control the apparatus to report the activation duration of the candidate QoS based on user equipment assistance information UAI.

19. The apparatus according to any one of claims 15 to 18, wherein the transceiver module is further configured to receive configuration information; and
that the processing module is configured to control the apparatus to report the at least one candidate QoS and the activation duration of the candidate QoS comprises:
the processing module is configured to control the apparatus to report the at least one candidate QoS and the activation duration of the candidate QoS based on the configuration information.

20. A communication apparatus, wherein the communication apparatus comprises a transceiver module and a processing module, wherein
the processing module is configured to control the apparatus to report a minimum duration for quality of service QoS refresh;
the transceiver module is configured to receive first information, wherein the first information indicates a first QoS; and
the processing module is further configured to control the apparatus to perform data transmission based on the first QoS in the minimum duration for QoS refresh.

21. The apparatus according to claim 20, wherein
the transceiver module is further configured to receive second information, wherein the second information indicates a second QoS; and
the processing module is further configured to control the apparatus to perform data transmission based on the second QoS after the minimum duration for QoS refresh.

22. The apparatus according to claim 20 or 21, wherein start time of the minimum duration for QoS refresh is obtained based on receiving time of the first information; or
start time of the minimum duration for QoS refresh is obtained based on receiving time of the first information and a hysteresis duration for QoS activation.

23. The apparatus according to any one of claims 20 to 22, wherein that the processing module is configured to control the apparatus to report the minimum duration for QoS refresh comprises: the processing module is configured to control the apparatus to report, through terminal capability information, the minimum duration for QoS refresh.

24. The apparatus according to any one of claims 20 to 23, wherein the transceiver module is further configured to receive configuration information; and
that the processing module is configured to control the apparatus to report the minimum duration for QoS refresh comprises:
the processing module is configured to control the apparatus to report, based on the configuration information, the minimum duration for QoS refresh.

25. A communication apparatus, wherein the communication apparatus comprises a transceiver module and a processing module, wherein
the processing module is configured to control the apparatus to report a hysteresis duration for quality of service QoS activation;
the transceiver module is configured to receive first information, wherein the first information indicates a first QoS; and
the processing module is further configured to control the apparatus to perform data transmission based on the first QoS after the hysteresis duration for QoS activation.

26. The apparatus according to claim 25, wherein start time of the hysteresis duration for QoS activation is obtained based on receiving time of the first information.

27. The apparatus according to claim 25 or 26, wherein that the processing module is configured to control the apparatus to report the hysteresis duration for QoS activation comprises: the processing module is configured to control the apparatus to report, through terminal capability information, the hysteresis duration for QoS activation.

28. The apparatus according to any one of claims 25 to 27, wherein the transceiver module is further configured to receive configuration information; and
that the processing module is configured to control the apparatus to report the hysteresis duration for QoS activation comprises:
the processing module is configured to control the apparatus to report, based on the configuration information, the hysteresis duration for QoS activation.

29. A computer-readable storage medium, wherein the computer-readable storage medium stores computer instructions or a program; and when the computer instructions or the program is run, the method according to any one of claims 1 to 5 is performed, or the method according to any one of claims 6 to 10 is performed, or the method according to any one of claims 11 to 14 is performed.

30. A computer program product, wherein the computer program product comprises computer instructions; and when a part or all of the computer instructions are run, the method according to any one of claims 1 to 5 is performed, or the method according to any one of claims 6 to 10 is performed, or the method according to any one of claims 11 to 14 is performed.
